# EUROPEAN PATENT SPECIFICATION

(11) **EP 3 742 803 B1**
(45) Date of publication and mention of the grant of the patent: **01.03.2023**
(21) Application number: 18902176.9
(22) Date of filing: 29.01.2018
(51) Int. Cl.: H04W 48/12, H04W 48/20, H04W 36/00, H04W 36/08, H04W 36/06

(54) **CELL RESELECTION METHOD AND DEVICE**
ZELLENNEUAUSWAHLVERFAHREN UND -VORRICHTUNG
PROCÉDÉ ET DISPOSITIF DE RESÉLECTION DE CELLULE

(43) Date of publication of application: 25.11.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan, Guangdong 523860 (CN)
(74) Representative: Manitz Finsterwald Patent- und Rechtsanwaltspartnerschaft mbB
(86) International application number: PCT/CN2018/074440
(87) International publication number: WO 2019/144399

(56) References cited:
- CN-A- 101 232 730
- CN-A- 102 685 838
- CN-A- 103 974 286
- US-A1- 2007 049 325
- US-A1- 2015 341 833
- HUAWEI ET AL: "Discussion on mobility scenario for E-UTRA connected to 5GC", 3GPP DRAFT; R2-1711112 DISCUSSION ON MOBILITY SCENARIO FOR E-UTRA CONNECTED TO 5GC, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG2, no. Prague, Czech Republic; 20171009 - 20171013 8 October 2017 (2017-10-08), XP051343119, Retrieved from the Internet: URL:http://www.3gpp.org/ftp/Meetings_3GPP_ SYNC/RAN2/Docs/ [retrieved on 2017-10-08]
- NOKIA ET AL: "E-UTRA Cell Selection and Cell Reselection Aspects", 3GPP DRAFT; R2-074051 E-UTRA CELL RESELECTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20071002, 2 October 2007 (2007-10-02), XP050136685, [retrieved on 2007-10-02]
- HUAWEI ET AL: "Network selection for initial access in E-UTRA connected to 5GC", 3GPP DRAFT; R2-1705709 NETWORK SELECTION FOR INITIAL ACCESS IN E-UTRA CONNECTED TO 5GC, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG2, no. Hangzhou, China; 20170515 - 20170519 14 May 2017 (2017-05-14), XP051276012, Retrieved from the Internet: URL:http://www.3gpp.org/ftp/Meetings_3GPP_ SYNC/RAN2/Docs/ [retrieved on 2017-05-14]
- APPLE: "Cell Reselection in INACTIVE State", 3GPP DRAFT; R2-1801422, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Vancouver, Canada; 20180122 - 20180126 12 January 2018 (2018-01-12), XP051386831, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-12]
- LG ELECTRONICS INC: "Cell Reselection with CSG Cell in NB-IoT", 3GPP TSG-RAN WG2 Meeting #99 R2-1709278, vol. RAN WG2, 20 August 2017 (2017-08-20), - 25 August 2017 (2017-08-25), XP051319042,
- HUAWEI et al.: "Cell Selection and Reselection Rules", 3GPP TSG-RAN WG2 NR Ad hoc 0118 R2-1801199, vol. RAN WG2, 12 January 2018 (2018-01-12) , - 26 January 2018 (2018-01-26), XP051386640,
- LG ELECTRONICS INC: "Cell Reselection Parameters for INACTIVE Mode", 3GPP TSG-RAN WG2 NR Ad hoc 0118 R2-1801429, vol. RAN WG2, 12 January 2018 (2018-01-12) , - 26 January 2018 (2018-01-26), XP051386838,

## Description

### TECHNICAL FIELD

The disclosure relates to the technical field of wireless communications, and particularly to a cell reselection method and a user equipment.

### BACKGROUND

For meeting the demands of people on the rates, delays, high-speed mobility and energy efficiency of services as well as diversity and complexity of services in the future, the 3rd Generation Partnership Project (3GPP) has started researching and developing 5th Generation (5G).

Main application scenarios of 5G may include Enhance Mobile Broadband (eMBB), Ultra Reliable Low Latency Communication (URLLC) and massive Machine Type Communication (mMTC).

5G is also called New Radio (NR). During early deployment of NR, it is unlikely to implement complete NR coverage, so typical network coverage is a combination of Long Term Evolution (LTE) coverage and NR coverage. In addition, for protecting early investments of a mobile operating company in LTE, a working mode that is tight interworking between LTE and NR was proposed. An NR cell definitely may be deployed independently.

In discussions about NR, a maximum channel bandwidth of each NR carrier is 100MHz for a low frequency and 400MHz for a high frequency, and the 100MHz/400MHz channel bandwidth is continuous. If User Equipment (UE) keeps working on a broadband carrier, power consumption of the UE is high, therefore, regulation of a Radio Frequency (RF) bandwidth of the UE according to a practical throughput of the UE is suggested.

When UE executes cell selection and cell reselection in an idle state, for meeting load balance in the idle state, a frequency-priority-based cell reselection policy is defined. In co-frequency cells or inter-frequency cells with the same priority, an R criterion is adopted for cell reselection, namely sequencing may be performed according to signal quality of the cells, and the cell with highest signal quality may be selected as a candidate reselection target cell. For a cell with a high frequency priority, the cell with the high frequency priority may be reselected when signal quality of the cell meets a certain threshold. For a cell with a low frequency priority, the cell with the low frequency priority may be reselected only when signal quality of a serving cell is lower than a certain threshold. Frequency-priority-based cell reselection may also be adopted for NR cells.

In an LTE cell, if the present LTE cell supports LTE-NR Dual Connection (DC) between LTE and NR, the LTE cell may broadcast 5G indication information through a system message (for example, a System Information Block 2 (SIB2)), and UE, when reading the 5G indication information, may display a 5G signal on a screen.

In an Evolved LTE (eLTE) cell, an Evolved Node B (eNB) may be connected to a 4th Generation (4G) Core Network (CN) (for example, an Evolved Packet Core (EPC)) and a 5G CN, and in such case, it may be broadcast through a system message that the CN that the eNB is connected to is the EPC, or the 5GCN, or the EPC and the 5G CN.

Based on this, if UE resides in an LTE cell (for example, for co-frequency deployment), all LTE cells have the same frequency priority. Cell reselection may be implemented according to an R criterion, namely the LTE cell broadcasting 5G indication information (called an LTE cell supporting 5G indication information hereinafter) and an eLTE cell have the same reselection priority, and cell reselection may be performed according to signal quality. However, in the LTE cell supporting 5G indication information and the eLTE cell, an operating company may expect the UE to preferably reside in a cell supporting a certain function. There has been no solution for how to implement cell reselection with an operating requirement of an operating company being met.

Related technology is known from R2-1711112 titled with "Discussion on mobility scenario for E-UTRA connected to 5GC" and R2-074051 titled with "E-UTRA cell selection and cell reselection aspects".

### SUMMARY

The present invention defines a method for cell reselection performed by a user equipment according to independent claim 1 and a corresponding user equipment according to independent claim 5. Preferred embodiments are defined in the dependent claims.

### BRIEF DESCRIPTION OF THE DRAWINGS

In the description below, the embodiments which fall within the scope of the claims are marked with the wording "embodiment of the present invention". All other passages referring to embodiments, embodiments of the disclosure, disclosures, examples, aspects are to be understood as useful for understanding the invention.
FIG. 1 is a flowchart of a cell reselection method according to an embodiment of the disclosure.
FIG. 2 is a structure composition diagram of a cell reselection device according to an embodiment of the disclosure.
FIG. 3 is a structure composition diagram of a computer device according to an embodiment of the disclosure.

### DETAILED DESCRIPTION

For making the characteristics and technical contents of the embodiments of the disclosure understood in more detail, implementation of the embodiments of the disclosure will be described below in combination with the drawings in detail. The drawings are only adopted for description as references and not intended to limit the embodiments of the disclosure.

The technical solutions of the embodiments of the disclosure are applied to a 5G system. A 5G system, as a main application scenario, will be described below.
1) An eMBB scenario: eMBB aims to enable a user to obtain multimedia content, service and data, and service requirements thereof increase rapidly. Since eMBB may be deployed in different scenarios, for example, a room, an urban area, a rural area and so on, and service capabilities and requirements thereof are greatly different, it is necessary to analyze a service in combination with a specific deployment scenario.
2) A URLLC scenario: typical applications of URLLC include industrial automation, power automation, remote medical operation, traffic safety guarantee and the like.
3) An mMTC scenario: typical characteristics of mMTC include high connection density, small data volume, delay-insensitive services, low cost and long service life of modules and the like.

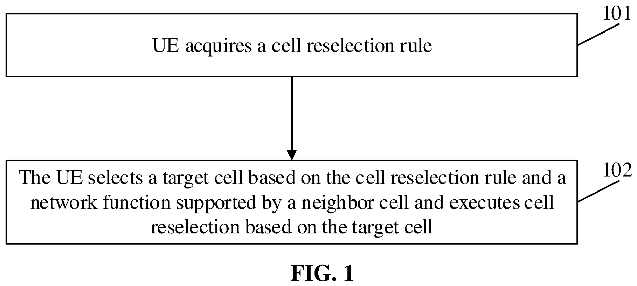

FIG. 1 is a flowchart of a cell reselection method according to an embodiment of the disclosure. As shown in FIG. 1, the cell reselection method includes the following operations.

In operation 101, UE acquires a cell reselection rule.

In the embodiments of the disclosure, the UE may be any device capable of communicating with a network, such as a mobile phone, a tablet computer, a notebook computer and a desktop computer.

The UE may acquire the cell reselection rule through the following manners.

A first manner is: the UE acquires the cell reselection rule through a configuration of a protocol.

A second manner corresponding to all embodiments of the present invention, is: the UE acquires the cell reselection rule through a system message or locally pre-stored information or RRC signaling or NAS signaling.

In operation 102, the UE selects a target cell based on the cell reselection rule and a network function supported by a neighbor cell and executes cell reselection based on the target cell.

The operation that the UE selects the target cell based on the cell reselection rule and the network function supported by the neighbor cell may specifically be implemented through the following manners.

### Manner 1:

1) The UE acquires a system message broadcast by a first cell and determines based on the system message broadcast by the first cell that the first cell is a cell not supporting a target network function.

For example, the UE resides in a cell, acquires a system message broadcast by the cell and may determine the type of the cell based on the system message. For example, the cell may be an ordinary LTE cell, i.e., a non-5G indication cell (i.e., a cell of which a system message includes no 5G indication information), which is not an eLTE cell.

2) The UE performs neighbor cell measurement in the first cell.

3.1) In response to detecting by measurement that a second cell supports the target network function and signal quality of the second cell is higher than a first threshold, the second cell is determined as the target cell, the second cell being a co-frequency neighbor cell of the first cell.

The UE may acquire a system message broadcast by the neighbor cell and may determine whether the second cell supports the target network function based on the system message broadcast by the neighbor cell.

The UE may acquire the system message broadcast by the first cell and determine whether the second cell supports the target network function based on the system message broadcast by the first cell.

In all embodiments of the present invention, the target network function includes at least one of:
a function of 5G indication information and a function of type information of a CN that a base station is connected to.

A 5G indication cell may have the function of 5G indication information, namely a system message of the 5G indication cell may include 5G indication information. An eLTE cell may have the function of type information of a CN that a base station is connected to, namely a system message of the eLTE cell may include type information (for example, an EPC, or a 5G CN, or the EPC and the 5G CN) of a CN that a base station is connected to.

3.2) In response to detecting by measurement that signal quality of a third cell with a high frequency priority is higher than a first threshold, the third cell is determined as the target cell, the third cell being an inter-frequency neighbor cell of the first cell.

It is to be understood that each threshold in the solution may be acquired through a system message broadcast by a cell.

Manner 2 corresponding to the embodiments of the present invention:
1) The cell reselection rule includes multiple reselection sub-rules, each reselection sub-rule corresponding to a priority; and the UE selects the reselection sub-rules for selecting the target cell according to a sequence from high to low priorities.

For example, a frequency priority rule may have a first class priority and a network function rule may have a second class priority. Or, the frequency priority rule may have a second class priority and the network function rule may have a first class priority.

2.1) Under the condition that the multiple reselection sub-rules include a first reselection sub-rule and a second reselection sub-rule, the first reselection sub-rule is a network-function-based reselection sub-rule, the second reselection sub-rule is a frequency-priority-based reselection sub-rule and the reselection sub-rule with the first class priority is the network-function-based reselection sub-rule, the following operations are executed:
the UE performs neighbor cell measurement in the first cell, the first cell not supporting the target network function;
in response to it is measured that the second cell supports the target network function and the signal quality of the second cell is higher than the first threshold, the second cell is determined as the target cell;
the second cell is a co-frequency neighbor cell or an inter-frequency neighbor cell of the first cell.

The UE may acquire the system message broadcast by the neighbor cell and determine whether the second cell supports the target network function based on the system message broadcast by the neighbor cell.

The UE may acquire the system message broadcast by the first cell and determine whether the second cell supports the target network function based on the system message broadcast by the first cell.

The target network function includes at least one of:
a function of 5G indication information and a function of type information of a CN that a base station is connected to.

A 5G indication cell may have the function of 5G indication information, namely a system message of the 5G indication cell may include 5G indication information. An eLTE cell may have the function of type information of a CN that a base station is connected to, namely a system message of the eLTE cell may include type information (for example, an EPC, or a 5G CN, or the EPC and the 5G CN) of a CN that a base station is connected to.

2.2) Under the condition that the multiple reselection sub-rules include a first reselection sub-rule and a second reselection sub-rule, the first reselection sub-rule is a frequency-priority-based reselection sub-rule, the second reselection sub-rule is a network-function-based reselection sub-rule and the reselection sub-rule with the first class priority is the frequency-priority-based reselection sub-rule, the following operations are executed:
the UE performs neighbor cell measurement in the first cell;
in response to it is measured that the signal quality of the third cell with the high frequency priority is higher than the first threshold, the third cell is determined as the target cell;
the third cell is an inter-frequency neighbor cell of the first cell.

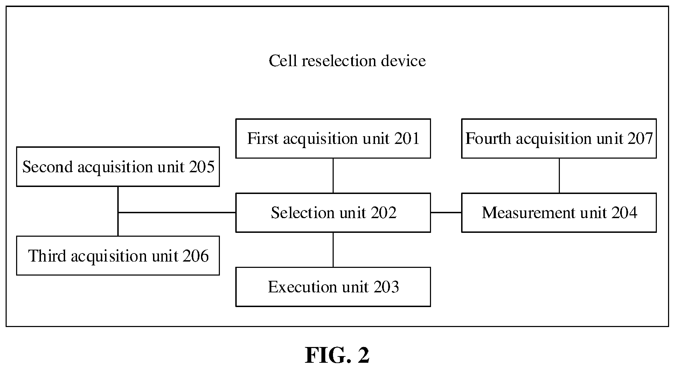

FIG. 2 is a structure composition diagram of a cell reselection device according to an embodiment of the disclosure. As shown in FIG. 2, the cell reselection device includes a first acquisition unit 201, a selection unit 202 and an execution unit 203.

The first acquisition unit 201 is configured to acquire a cell reselection rule.

The selection unit 202 is configured to select a target cell based on the cell reselection rule and a network function supported by a neighbor cell.

The execution unit 203 is configured to execute cell reselection based on the target cell.

The first acquisition unit 201 may be configured to acquire the cell reselection rule through a configuration of a protocol.

The device further may include a measurement unit 204.

The measurement unit 204 may be configured to perform neighbor cell measurement in a first cell.

The selection unit 202 may be configured to, in response to it is measured that a second cell supports a target network function and signal quality of the second cell is higher than a first threshold, determine the second cell as the target cell, the second cell being a co-frequency neighbor cell of the first cell.

The device further may include a second acquisition unit 205.

The second acquisition unit 205 may be configured to acquire a system message broadcast by the neighbor cell and determine whether the second cell supports the target network function based on the system message broadcast by the neighbor cell.

The device further may include a third acquisition unit 206.

The third acquisition unit 206 may be configured to acquire a system message broadcast by the first cell and determine whether the second cell supports the target network function based on the system message broadcast by the first cell.

The device further may include the measurement unit 204.

The measurement unit 204 may be configured to perform neighbor cell measurement in the first cell.

The selection unit 202 may be configured to, in response to it is measured that signal quality of a third cell with a high frequency priority is higher than the first threshold, determine the third cell as the target cell.

The third cell may be an inter-frequency neighbor cell of the first cell.

The device further may include a fourth acquisition unit 207.

The fourth acquisition unit 207 may be configured to acquire the system message broadcast by the first cell and determine based on the system message broadcast by the first cell that the first cell is a cell not supporting the target network function.

The target network function includes at least one of:
a function of 5G indication information and a function of type information of a CN that a base station is connected to.

The first acquisition unit 201 is configured to acquire the cell reselection rule through a system message or locally pre-stored information or RRC signaling or NAS signaling.

The cell reselection rule includes multiple reselection sub-rules, each reselection sub-rule corresponding to a priority.

The selection unit 202 is configured to select the reselection sub-rules for selecting the target cell according to a sequence from high to low priorities.

The multiple reselection sub-rules include a first reselection sub-rule and a second reselection sub-rule, the first reselection sub-rule may be a network-function-based reselection sub-rule and the second reselection sub-rule may be a frequency-priority-based reselection sub-rule, the device may include the measurement unit 204.

The measurement unit 204 is configured to perform neighbor cell measurement in the first cell, the first cell not supporting the target network function.

The selection unit 202 is configured to, in response to it is measured that the second cell supports the target network function and the signal quality of the second cell is higher than the first threshold, determine the second cell as the target cell, the second cell being a co-frequency neighbor cell or an inter-frequency neighbor cell of the first cell.

The device further may include the second acquisition unit 205.

The second acquisition unit 205 may be configured to acquire the system message broadcast by the neighbor cell and determine whether the second cell supports the target network function based on the system message broadcast by the neighbor cell.

The device further may include the third acquisition unit 206.

The third acquisition unit 206 may be configured to acquire the system message broadcast by the first cell and determine whether the second cell supports the target network function based on the system message broadcast by the first cell.

The multiple reselection sub-rules may include the first reselection sub-rule and the second reselection sub-rule, the first reselection sub-rule may be a frequency-priority-based reselection sub-rule and the second reselection sub-rule may be a network-function-based reselection sub-rule, the device may include the measurement unit 204.

The measurement unit 204 may be configured to perform neighbor cell measurement in the first cell.

The selection unit 202 may be configured to, in response to it is measured that the signal quality of the third cell with the high frequency priority is higher than the first threshold, determine the third cell as the target cell, the third cell being an inter-frequency neighbor cell of the first cell.

The target network function includes at least one of:
a function of 5G indication information and a function of type information of a CN that a base station is connected to.

Those skilled in the art should know that functions realized by each unit in the cell reselection device shown in FIG. 2 can be understood with reference to related descriptions about the cell reselection method. The functions of each unit in the cell reselection device shown in FIG. 2 may be realized through a program running in a processor, and may also be realized through a specific logical circuit.

When being implemented in form of software functional module and sold or used as an independent product, the cell reselection device of the embodiments of the disclosure may also be stored in a computer-readable storage medium. Based on such an understanding, the technical solutions of the embodiments of the disclosure substantially or parts making contributions to the related arts may be embodied in form of software product, and the computer software product may be stored in a storage medium, including a plurality of instructions configured to enable a computer device (which may be a personal computer, a server, a network device or the like) to execute all or part of the method in each embodiment of the disclosure. The storage medium may include: various media capable of storing program codes such as a U disk, a mobile hard disk, a Read Only Memory (ROM), a magnetic disk or an optical disk. Therefore, the embodiments of the disclosure are not limited to any specific hardware and software combination.

Correspondingly, the embodiments of the disclosure also provide a computer storage medium, in which computer-executable instructions have been stored, the computer-executable instructions being executable by a processor to implement the cell reselection method of the embodiments of the disclosure.

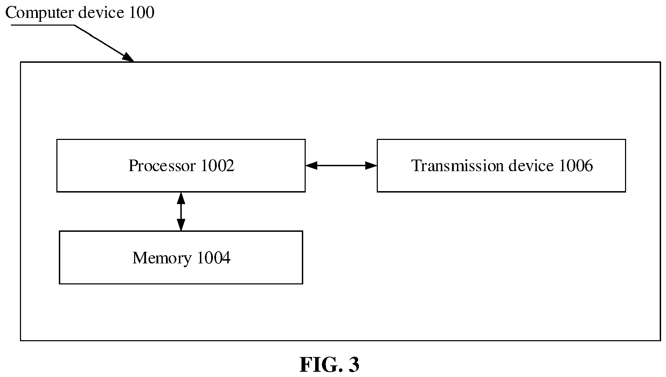

FIG. 3 is a structure diagram of a computer device according to an embodiment of the disclosure. The computer device may be any type of UE. As shown in FIG. 3, the computer device 100 may include: one or more (only one is illustrated in the figure) processors 1002 (the processor 1002 may include, but not limited to, a processing device such as a Micro Control Unit (MCU) or a Field Programmable Gate Array (FPGA)); a memory 1004 configured to store data; and a transmission device 1006 configured for a communication function. Those of ordinary skill in the art should know that the structure shown in FIG. 3 is only schematic and not intended to limit the structure of the electronic device. For example, the computer device 100 may further include components more or fewer than the components shown in FIG. 3 or has a configuration different from that shown in FIG. 3.

The memory 1004 may be configured to store a module and a software program of application software, which is for example, a program instruction/module corresponding to the method in the embodiments of the disclosure. The processor 1002 may run the software program and module stored in the memory 1004, thereby executing various functional applications and data processing, namely implementing the abovementioned method. The memory 1004 may include a high-speed random access memory or include a nonvolatile memory, for example, one or more magnetic storage devices, flash memories or other nonvolatile solid-state memories. In some examples, the memory 1004 may further include a memory arranged remotely relative to the processor 1002 and the remote memory may be connected to the computer device 100 through a network. An example of the network includes, but not limited to, the Internet, an intranet, a local area network, a mobile communication network and a combination thereof.

The transmission device 1006 is configured to receive or send data through a network. A specific example of the network may include a wireless network provided by a communication provider of the computer device 100. In an example, the transmission device 1006 includes a Network Interface Controller (NIC), which may be connected with another network device through a base station, thereby communicating with the Internet. In an example, the transmission device 1006 may be an RF module, configured to communicate with the Internet in a wireless manner.

The technical solutions recorded in the embodiments of the disclosure may be freely combined without conflicts.

It is to be understood that the disclosed method and intelligent device may be implemented in another manner. The device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part of all of the units may be selected according to a practical requirement to achieve the purposes of the solutions of the embodiments.

In addition, each functional unit in each embodiment of the disclosure may be integrated into a second processing unit. Each unit may serve as an independent unit and two or more than two units may be integrated into a unit. The integrated unit may be implemented in a hardware form and may also be implemented in form of hardware and software functional unit.

The above is only the specific implementation mode of the disclosure and not intended to limit the scope of protection of the disclosure. The scope of the invention is exclusively defined by the appended claims.

## Claims

1. A method for cell reselection, comprising:
the step of acquiring(101), by User Equipment, UE, a cell reselection rule through a system message or locally pre-stored information or Radio Resource Control, RRC, signaling, or Non-Access Stratum, NAS, signaling,
the step of selecting(102), by the UE, the target cell based on the cell reselection rule and the network function supported by the neighbor cell thereby performing, by the UE, neighbor cell measurement in a first cell, the first cell not supporting a target network function; and
measuring that a second cell supports the target network function and signal quality of the second cell is higher than a first threshold, determining, by the UE, the second cell as the target cell, wherein the second cell is a co-frequency neighbor cell or an inter-frequency neighbor cell of the first cell,
and the step of executing (102), by the UE, cell selection to the target cell,
wherein the target network function comprises at least one of a function of 5th Generation,5G, indication information and a function of type information of a Core Network,CN, that a base station is connected to;
wherein the cell reselection rule comprises multiple reselection sub-rules, each of the multiple reselection sub-rules corresponds to a priority, and the UE selects the multiple reselection sub-rules according to a sequence from high to low priorities for selecting the target cell,
wherein the multiple reselection sub-rules comprise a first reselection sub-rule and a second reselection sub-rule,
the first reselection sub-rule is a network-function-based reselection sub-rule and the second reselection sub-rule is a frequency-priority-based reselection sub-rule, or,
the first reselection sub-rule is a frequency-priority-based reselection sub-rule and the second reselection sub-rule is a network-function-based reselection sub-rule.

2. The method of claim 1, further comprising:
acquiring, by the UE, the system message broadcast by the neighbor cell; and
determining, by the UE, whether the second cell supports the target network function based on the system message broadcast by the neighbor cell.

3. The method of claim 1, further comprising:
acquiring, by the UE, the system message broadcast by the first cell; and
determining, by the UE, whether the second cell supports the target network function based on the system message broadcast by the first cell.

4. The method of claim 1, wherein selecting(102), by the UE, the target cell based on the cell reselection rule and the network function supported by the neighbor cell further comprises:
in response to it is measured that signal quality of a third cell with a high frequency priority is higher than a first threshold, determining, by the UE, the third cell as the target cell,
wherein the third cell is an inter-frequency neighbor cell of the first cell.

5. A User Equipment, UE, for cell reselection, comprising:
a processor;
a memory configured to store instructions executable by the processor; and
a transmission device configured to send and receive data under control of the processor;
wherein the processor is configured to implement a method comprising:
the step of acquiring, via the transmission device, the cell reselection rule through a configuration of a protocol, or a system message, or locally pre-stored information, or Radio Resource Control,RRC, signaling, or Non-Access Stratum,NAS, signaling,
the step of selecting the target cell based on the cell reselection rule and the network function supported by the neighbor cell thereby
performing neighbor cell measurement in a first cell, the first cell not supporting a target network function; and
measuring that a second cell supports the target network function and signal quality of the second cell is higher than a first threshold, determining, by the UE, the second cell as the target cell, wherein the second cell is a co-frequency neighbor cell or an inter-frequency neighbor cell of the first cell,
and the step of executing (102), by the UE, cell selection to the target cell,
wherein the target network function comprises at least one of: a function of 5th Generation,5G, indication information and a function of type information of a Core Network,CN, that a base station is connected to;
wherein the cell reselection rule comprises multiple reselection sub-rules, each of the multiple reselection sub-rules corresponds to a priority, and the UE selects the multiple reselection sub-rules according to a sequence from high to low priorities for selecting the target cell,
wherein the multiple reselection sub-rules comprise a first reselection sub-rule and a second reselection sub-rule,
the first reselection sub-rule is a network-function-based reselection sub-rule and the second reselection sub-rule is a frequency-priority-based reselection sub-rule, or,
the first reselection sub-rule is a frequency-priority-based reselection sub-rule and the second reselection sub-rule is a network-function-based reselection sub-rule.

6. The UE of claim 5, wherein the processor is further configured to:
acquire, through the transmission device, the system message broadcast by the neighbor cell; and
determine whether the second cell supports the target network function based on the system message broadcast by the neighbor cell.

7. The UE of claim 5, wherein the processor is further configured to:
acquire, through the transmission device, the system message broadcast by the neighbor cell; and
determine whether the second cell supports the target network function based on the system message broadcast by the first cell.

8. The UE of claim 5, wherein when selecting the target cell based on the cell reselection rule and the network function supported by the neighbor cell, the processor is configured to:
in response to it is measured that signal quality of a third cell with a high frequency priority is higher than a first threshold, determine the third cell as the target cell,
wherein the third cell is an inter-frequency neighbor cell of the first cell.

## Patentansprüche

1. Verfahren zur Zellenneuauswahl, umfassend
den Schritt des Erfassens (101) einer Zellenneuauswahlregel durch ein Teilnehmergerät ("User Equipment", UE) über eine Systemnachricht oder lokal vorgespeicherte Informationen oder Funkressourcensteuerungs-("Radio Resource Control"-, RRC-)-Signalisierung oder "Non-Access Stratum"-Signalisierung, NAS-Signalisierung;
den Schritt des Auswählens (102) der Zielzelle durch das UE, basierend auf der Zellenneuauswahlregel und der durch die benachbarte Zelle unterstützten Netzwerkfunktion, dadurch
Durchführen einer Nachbarzellenmessung durch das UE in einer ersten Zelle, wobei die erste Zelle nicht eine Zielnetzwerkfunktion unterstützt; und
Messen, dass eine zweite Zelle die Zielnetzwerkfunktion unterstützt und dass die Signalqualität der zweiten Zelle höher als ein erster Schwellenwert ist, und Festlegen der zweiten Zelle als die Zielzelle durch das UE, wobei die zweite Zelle eine Ko-Frequenz-Nachbarzelle oder eine Interfrequenz-Nachbarzelle der ersten Zelle ist;
und den Schritt des Ausführens (102) der Zellauswahl zu der Zielzelle durch das UE,
wobei die Zielnetzwerkfunktion mindestens eine umfasst aus einer Funktion von Angabeinformationen fünfter Generation, 5G, und einer Funktion von Typinformationen eines Kernnetzes ("Core Network", CN), mit dem eine Basisstation verbunden ist;
wobei die Zellenneuauswahlregel eine Mehrzahl von Neuauswahl-Unterregeln umfasst, wobei jede der Mehrzahl von Neuauswahl-Unterregeln einer Priorität entspricht und das UE die Mehrzahl von Neuauswahl-Unterregeln gemäß einer Sequenz von hohen zu niedrigen Prioritäten für die Auswahl der Zielzelle auswählt,
wobei die Mehrzahl von Neuauswahl-Unterregeln eine erste Neuauswahl-Unterregel und eine zweite Neuauswahl-Unterregel umfasst,
die erste Neuauswahl-Unterregel eine netzwerkfunktionsbasierte Neuauswahl-Unterregel und die zweite Neuauswahl-Unterregel eine frequenzprioritätsbasierte Neuauswahl-Unterregel ist, oder die erste Neuauswahl-Unterregel eine frequenzprioritätsbasierte Neuauswahl-Unterregel und die zweite Neuauswahl-Unterregel eine netzwerkfunktionsbasierte Neuauswahl-Unterregel ist.

2. Verfahren nach Anspruch 1, ferner umfassend:
Erfassen des Systemnachrichten-Rundrufs (Broadcast) der Nachbarzelle durch das UE; und
Feststellen durch das UE, basierend auf dem Systemnachrichten-Broadcast der Nachbarzelle, ob die zweite Zelle die Zielnetzwerkfunktion unterstützt.

3. Verfahren nach Anspruch 1, ferner umfassend:
Erfassen des Systemnachrichten-Rundrufs (Broadcast) der ersten Zelle durch das UE; und
Feststellen durch das UE, basierend auf dem Systemnachrichten-Broadcast der ersten Zelle, ob die zweite Zelle die Zielnetzwerkfunktion unterstützt.

4. Verfahren nach Anspruch 1, wobei das Auswählen (102) der Zielzelle durch das UE, basierend auf der Zellenneuauswahlregel und der durch die Nachbarzelle unterstützten Netzwerkfunktion ferner umfasst:
in Reaktion darauf, dass gemessen wird, dass die Signalqualität einer dritten Zelle mit einer höheren Frequenzpriorität höher als ein erster Schwellenwert ist: Festlegen der dritten Zelle als die Zielzelle durch das UE, wobei die dritte Zelle eine Interfrequenz-Nachbarzelle der ersten Zelle ist.

5. Teilnehmergerät ("User Equipment", UE) zur Zellenneuauswahl, umfassend:
einen Prozessor,
einen Speicher, ausgelegt zum Speichern von durch den Prozessor ausführbaren Anweisungen; und
eine Übertragungseinrichtung, ausgelegt zum durch den Prozessor gesteuerten Senden und Empfangen von Daten;
wobei der Prozessor ausgelegt ist zum Implementieren eines Verfahrens, umfassend:
den Schritt des Erfassens der Zellenneuauswahlregel durch eine Konfiguration eines Protokolls oder eine Systemnachricht oder lokal vorgespeicherte Informationen oder Funkressourcensteuerungs-("Radio Resource Control"-, RRC-)-Signalisierung oder "Non-Access Stratum"-Signalisierung, NAS-Signalisierung, über die Übertragungseinrichtung,
den Schritt des Auswählens der Zielzelle, basierend auf der Zellenneuauswahlregel und der durch die benachbarte Zelle unterstützten Netzwerkfunktion, dadurch
Durchführen einer Nachbarzellenmessung in einer ersten Zelle, wobei die erste Zelle nicht eine Zielnetzwerkfunktion unterstützt; und
Messen, dass eine zweite Zelle die Zielnetzwerkfunktion unterstützt und dass die Signalqualität der zweiten Zelle höher als ein erster Schwellenwert ist, und Festlegen der zweiten Zelle als die Zielzelle durch das UE, wobei die zweite Zelle eine Ko-Frequenz-Nachbarzelle oder eine Interfrequenz-Nachbarzelle der ersten Zelle ist;
und den Schritt des Ausführens (102) der Zellauswahl zu der Zielzelle durch das UE,
wobei die Zielnetzwerkfunktion mindestens eine umfasst aus einer Funktion von Angabeinformationen fünfter Generation, 5G, und einer Funktion von Typinformationen eines Kernnetzes ("Core Network", CN), mit dem eine Basisstation verbunden ist;
wobei die Zellenneuauswahlregel eine Mehrzahl von Neuauswahl-Unterregeln umfasst, wobei jede der Mehrzahl von Neuauswahl-Unterregeln einer Priorität entspricht und das UE die Mehrzahl von Neuauswahl-Unterregeln gemäß einer Sequenz von hohen zu niedrigen Prioritäten für die Auswahl der Zielzelle auswählt,
wobei die Mehrzahl von Neuauswahl-Unterregeln eine erste Neuauswahl-Unterregel und eine zweite Neuauswahl-Unterregel umfasst,
die erste Neuauswahl-Unterregel eine netzwerkfunktionsbasierte Neuauswahl-Unterregel und die zweite Neuauswahl-Unterregel eine frequenzprioritätsbasierte Neuauswahl-Unterregel ist,
oder die erste Neuauswahl-Unterregel eine frequenzprioritätsbasierte Neuauswahl-Unterregel und die zweite Neuauswahl-Unterregel eine netzwerkfunktionsbasierte Neuauswahl-Unterregel ist.

6. UE nach Anspruch 5, wobei der Prozessor ferner ausgelegt ist zum
Erfassen des Systemnachrichten-Rundrufs (Broadcast) der Nachbarzelle durch die Übertragungseinrichtung; und
Feststellen, basierend auf dem Systemnachrichten-Broadcast der Nachbarzelle, ob die zweite Zelle die Zielnetzwerkfunktion unterstützt.

7. UE nach Anspruch 5, wobei der Prozessor ferner ausgelegt ist zum
Erfassen des Systemnachrichten-Rundrufs (Broadcast) der Nachbarzelle durch die Übertragungseinrichtung; und
Feststellen, basierend auf dem Systemnachrichten-Broadcast der ersten Zelle, ob die zweite Zelle die Zielnetzwerkfunktion unterstützt.

8. UE nach Anspruch 5, wobei bei der Auswahl der Zielzelle basierend auf der Zellenneuauswahlregel und der durch die Nachbarzelle unterstützten Netzwerkfunktion der Prozessor dafür ausgelegt ist,
in Reaktion darauf, dass gemessen wird, dass die Signalqualität einer dritten Zelle mit einer hohen Frequenzpriorität höher als ein erster Schwellenwert ist, die dritte Zelle als die Zielzelle festzulegen,
wobei die dritte Zelle eine Interfrequenz-Nachbarzelle der ersten Zelle ist.

## Revendications

1. Procédé de resélection de cellule, comprenant :
l'étape consistant à acquérir (101), par un équipement utilisateur, UE, une règle de resélection de cellule par le biais d'un message système ou d'informations pré-stockées localement ou d'une signalisation de commande de ressource radio, RRC, ou d'une signalisation de strate de non-accès, NAS,
l'étape consistant à sélectionner (102), par l'UE, la cellule cible sur la base de la règle de resélection de cellule et de la fonction de réseau prise en charge par la cellule voisine, ainsi
réalisant, par l'UE, une mesure de cellule voisine dans une première cellule, la première cellule ne prenant pas en charge une fonction de réseau cible ; et
mesurant qu'une deuxième cellule prend en charge la fonction de réseau cible et que la qualité de signal de la deuxième cellule est supérieure à un premier seuil, déterminant, par l'UE, la deuxième cellule en tant que cellule cible, la deuxième cellule étant une cellule voisine à co-fréquence ou une cellule voisine inter-fréquence de la première cellule,
et l'étape consistant à exécuter (102), par l'UE, une sélection de cellule à la cellule cible,
la fonction de réseau cible comprenant au moins un élément parmi : une fonction d'informations d'indication de 5ème génération, 5G, et une fonction d'informations de type d'un réseau central, CN, auquel une station de base est connectée ;
la règle de resélection de cellule comprenant de multiples sous-règles de resélection, chacune des multiples sous-règles de resélection correspondant à une priorité, et l'UE sélectionnant les multiples sous-règles de resélection selon une séquence de hautes à basses priorités pour sélectionner la cellule cible,
les multiples sous-règles de resélection comprenant une première sous-règle de resélection et une deuxième sous-règle de resélection,
la première sous-règle de resélection est une sous-règle de resélection basée sur une fonction de réseau et la deuxième sous-règle de resélection est une sous-règle de resélection basée sur une priorité de fréquence, ou,
la première sous-règle de resélection est une sous-règle de resélection basée sur une priorité de fréquence et la deuxième sous-règle de resélection est une sous-règle de resélection basée sur une fonction de réseau.

2. Procédé selon la revendication 1, comprenant en outre :
l'acquisition, par l'UE, du message système diffusé par la cellule voisine ; et
le fait de déterminer, par l'UE, si la deuxième cellule prend en charge la fonction de réseau cible sur la base du message système diffusé par la cellule voisine.

3. Procédé selon la revendication 1, comprenant en outre :
l'acquisition, par l'UE, du message système diffusé par la première cellule ; et
le fait de déterminer, par l'UE, si la deuxième cellule prend en charge la fonction de réseau cible sur la base du message système diffusé par la première cellule.

4. Procédé selon la revendication 1, dans lequel la sélection (102), par l'UE, de la cellule cible sur la base de la règle de resélection de cellule et de la fonction de réseau prise en charge par la cellule voisine comprend en outre :
en réponse, il est mesuré qu'une qualité de signal d'une troisième cellule ayant une haute priorité de fréquence est supérieure à un premier seuil, la détermination, par l'UE, de la troisième cellule en tant que cellule cible,
la troisième cellule étant une cellule voisine inter-fréquence de la première cellule.

5. Équipement utilisateur, UE, pour une resélection de cellule, comprenant :
un processeur ;
une mémoire configurée pour stocker des instructions exécutables par le processeur ; et
un dispositif de transmission configuré pour envoyer et recevoir des données sous la commande du processeur ;
le processeur étant configuré pour mettre en œuvre un procédé comprenant :
l'étape consistant à acquérir, par l'intermédiaire du dispositif de transmission, la règle de resélection de cellule par le biais d'une configuration d'un protocole, ou d'un message de système, ou d'informations pré-stockées localement, ou d'une signalisation de commande de ressource radio, RRC, ou d'une signalisation de strate de non-accès, NAS,
l'étape consistant à sélectionner la cellule cible sur la base de la règle de resélection de cellule et de la fonction de réseau prise en charge par la cellule voisine, ainsi
réalisant une mesure de cellule voisine dans une première cellule, la première cellule ne prenant pas en charge une fonction de réseau cible ; et
mesurant qu'une deuxième cellule prend en charge la fonction de réseau cible et que la qualité de signal de la deuxième cellule est supérieure à un premier seuil, déterminant, par l'UE, la deuxième cellule en tant que cellule cible, la deuxième cellule étant une cellule voisine à co-fréquence ou une cellule voisine inter-fréquence de la première cellule,
et l'étape consistant à exécuter (102), par l'UE, une sélection de cellule à la cellule cible,
la fonction de réseau cible comprenant au moins un élément parmi :
une fonction d'informations d'indication de 5ème génération, 5G, et une fonction d'informations de type d'un réseau central, CN, auquel une station de base est connectée ;
la règle de resélection de cellule comprenant de multiples sous-règles de resélection, chacune des multiples sous-règles de resélection correspondant à une priorité, et l'UE sélectionnant les multiples sous-règles de resélection selon une séquence de hautes à basses priorités pour sélectionner la cellule cible,
les multiples sous-règles de resélection comprenant une première sous-règle de resélection et une deuxième sous-règle de resélection,
la première sous-règle de resélection est une sous-règle de resélection basée sur une fonction de réseau et la deuxième sous-règle de resélection est une sous-règle de resélection basée sur une priorité de fréquence, ou,
la première sous-règle de resélection est une sous-règle de resélection basée sur une priorité de fréquence et la deuxième sous-règle de resélection est une sous-règle de resélection basée sur une fonction de réseau.

6. UE selon la revendication 5, dans lequel le processeur est en outre configuré pour :
acquérir, par le biais du dispositif de transmission, le message système diffusé par la cellule voisine ; et
déterminer, si la deuxième cellule prend en charge la fonction de réseau cible sur la base du message système diffusé par la cellule voisine.

7. UE selon la revendication 5, dans lequel le processeur est en outre configuré pour :
acquérir, par le biais du dispositif de transmission, le message système diffusé par la cellule voisine ; et
déterminer, si la deuxième cellule prend en charge la fonction de réseau cible sur la base du message système diffusé par la première cellule.

8. UE selon la revendication 5, dans lequel lors de la sélection de la cellule cible sur la base de la règle de resélection de cellule et de la fonction de réseau prise en charge par la cellule voisine, le processeur est configuré pour :
en réponse, il est mesuré que la qualité de signal d'une troisième cellule ayant une priorité de fréquence haute est supérieure à un premier seuil, déterminer la troisième cellule en tant que cellule cible,
la troisième cellule étant une cellule voisine inter-fréquence de la première cellule.
